# EUROPEAN PATENT APPLICATION

(11) **EP 0 841 087 A2**
(43) Date of publication of application: **13.05.1998**
(21) Application number: 97830582.9
(22) Date of filing: 10.11.1997
(51) Int. Cl.: B01J 2/00

(54) **A system and process for pelletizing products**

(30) Priority: 11.11.1996 IT BO960575
(71) Applicant: Zanchetta & C. S.r.l., 55015 Montecarlo (Lucca) (IT)
(72) Inventor: Marcheschi, Vittoriano, 55010 Lappato (LUCCA) (IT)
(74) Representative: Pederzini, Paolo

(57) **Abstract**

The invention relative to a system for pelletizing products envisages at least the following operating stages: positioning of a batch of products (4) in a process container (2), spraying of the batch of products with a pelletizing solution and solvent, stripping of the batch of products thus treated with a gaseous fluid which is injected into the process container (2), and recovery of the solvent from the mixture which consists of the solvent and the gaseous fluid, by means of heat exchange between the mixture and coolant in a heat exchanger (13); in accordance with the present invention, the coolant is also used for the stripping stage, the coolant which leaves the heat exchanger (13) being fed into the process container (2), so as to form the gaseous fluid.

## Description

The present invention relates to a system for pelletizing products and the relative pelletizing process. In particular, the present invention is part of the so-called pelletizer-drier sector, that is to say, machines which allow the preparation of pellets by the dry mixing of pharmaceutical powders, their subsequent wet pelletization, and final drying of the product thus obtained.

In such machines, the powders are placed in a special process container, in which they are mixed by a rotating blade and sprayed with suitable pelletizing solutions together with solvents. For the subsequent drying stage, a vacuum is created in the container, to lower the boiling point of the solvent sprayed onto the powders together with the pelletizing solution. The process container has a double liner, inside which a hot water circuit is envisaged, to heat the powders during drying.

During the drying stage, the batch of powders is supplied with a degree of heat sufficient to cause the solvent to pass from the liquid state to the gaseous state. The vapours created inside the process container are then pumped out of the process container by a system of pumps which maintain a vacuum in the container.

To accelerate the drying process, a quantity of dry gas, air or nitrogen, is blown through the batch of powders, so as to reinforce heating of the batch with a mechanical action in which the solvent vapours are provided with a carrier in order to leave the container: the more volatile components of the powder-solvent batch are thus removed, in a process commonly known as "stripping", which envisages extraction of the solvent vapours together with the carrier which consists of the afore-mentioned dry gas.

In those cases in which the pharmaceutical product to be processed in the container is not a water-based pelletizing product, the solvent sprayed during the pelletizing stage will be an organic solvent: the most common organic solvents are ethyl, methyl and isopropyl alcohol; methylene chloride, acetone, chloroform and other organic solvents are occasionally used in the pelletizing stage.

To prevent the solvent vapours extracted from the batch of powders from contaminating the external environment, they are recovered in a tank after condensation at a sufficiently low temperature, taking into account the absolute pressure of the vapours.

The vacuum line on a pelletizer-drier starts with the filters located above the process container, passing first through a heat exchanger (condenser), then through a system of vacuum pumps.

The solvent vapours, therefore, go through the above-mentioned system, passing through the condenser at a residual pressure usually lower than 100 mbar.

In order to cause a large quantity of solvent vapours to condense, the condenser must be supplied with a coolant at a sufficiently low temperature. The prior art envisages the installation of a mechanical cooling unit, able to produce the required cooling temperature for the process. The Applicant has developed a new technique which allows the same result - condensation of the solvent vapours - to be obtained without installing a mechanical cooling unit.

The present invention envisages that the condenser be supplied preferably with liquid nitrogen; following heat exchange with the vapours arriving from the process container, the nitrogen passes to the gaseous state and is then fed into the process container to carry out the stripping operation. Since the temperature encountered by the solvent vapours inside the condenser is much lower than that previously allowed by the known technique, a much larger amount of vapours are condensed (up to and above 99%).

As well as increased condensing efficiency, the liquid nitrogen system makes the entire system more economical, since the construction is simplified. Another advantage obtained by condensing vapours with the liquid nitrogen system, in addition to the afore-mentioned condensing efficiency, is a sort of "cryogenic pumping" of the vapours out of the process container, as explained below.

As already indicated, the drying stage of the process for the production of pharmaceutical pellets takes place in a vacuum and, for this purpose, a vacuum pump system is present. Considering the process container as a vessel with a perfect hermetic seal, once the air contained in it has been removed, the only gaseous element present during the drying cycle is the solvent vapour. Since condensation of the said vapours at a constant volume corresponds with a significant reduction in the pressure, the pressure reduction in the vacuum line is directly correlated to the percentage of vapours considered.

Taking into account the fact that the process container does not have a perfect hermetic seal (there are always leaks), and the fact that a given quantity of non-condensable gas is intentionally blown into the container, the increased condensing efficiency allowed by the liquid nitrogen system allows, for the above-mentioned reasons, a reduction, under the same conditions, of the capacity, and so also the power of the vacuum pumps installed.

A third advantage of the present invention derives from the use of gaseous nitrogen which, having fulfilled its purpose as a heat transfer fluid, leaves the condenser.

As already indicated, in order to reduce the drying time, a given quantity of dry gas is blown into the process container.

When the pharmaceutical powders react with oxygen, or when the solvent used during the pelletizing stage is organic, nitrogen may be blown through the batch being processed, instead of air. If a liquid nitrogen vapour condensing system is installed, the gaseous nitrogen which leaves the condenser is heated, then blown through the batch of powders; thus, it is not necessary to install gaseous nitrogen containers, and the system is more economical.

In pharmaceutical companies, a main liquid nitrogen tank is normally present; the liquid nitrogen is evaporated in a heat exchanger, then distributed in gaseous form to all of the processing systems which must be made inert.

The gaseous nitrogen made available following condensation of the vapours from the pelletizer may, therefore, be fed into the central distribution line, thus supplying relatively low-cost nitrogen, since it is used more than once. The liquid nitrogen vapour condensing system allows, on one hand, improved condensing efficiency, and on the other, use of the gaseous nitrogen which leaves the condenser for the vapour stripping operation, to make the process system inert, to make the system for the production of pellets more economical in general (reduction of installed power), and finally, to lower the general gaseous nitrogen requirements of the company.

The technical characteristics of the invention according to the above-mentioned objects are laid out in the claims below and the advantages of the disclosure are apparent from the detailed description which follows, with reference to the accompanying drawings, which illustrate a preferred embodiment of the invention and in which:

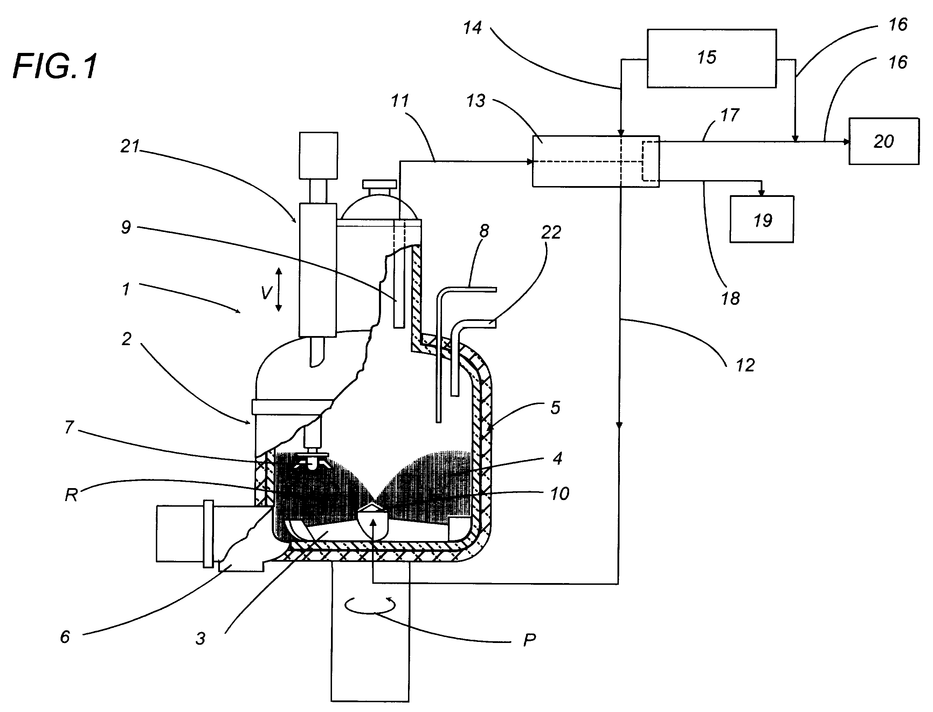

- Figure 1 is a diagram of a possible embodiment of the present invention.

The present invention is described below, with reference both to the system and the process, reference being made to the embodiment illustrated in figure 1.

A pelletizing system basically consists of a pelletizer 1 and heat exchanger 13, fitted to the former so as to allow the recovery of the solvent from the mixture which consists of the solvent and the gaseous fluid used for stripping.

Inside the pelletizer 1, a batch of powders 4 is placed in a special process container 2, in which the powders are mixed by a rotating blade 3 (in the direction indicated by P in figure 1) and sprayed with suitable pelletizing solutions together with solvents. A crusher 21, 7 may act upon the batch of powders, said crusher being vertically mobile in direction V and rotating in direction R in the example illustrated.

To place the powders in the container 2, in the example illustrated, a tube 22 is envisaged, whilst there is an outlet 6 for the outfeed of the pellets, and a tube 8 for the supply of pelletizing solution and solvent.

After spraying the powders with the pelletizing solution and solvent, the drying stage is carried out. A double liner 5 on the walls of the container 2 is used for this purpose, inside which water is circulated at a relatively high temperature in order to heat the batch of powders and cause the solvent sprayed on the powders to evaporate.

To facilitate this operation, a vacuum is normally created in the container, lowering the boiling point of the solvent sprayed on the powders together with the pelletizing solution.

In the accompanying drawings, the pumps and devices used to create a vacuum in the container are not illustrated, nor are any pumps which may be present at the connections for the supply of the liquids described below, since these may be created in a way substantially similar to that envisaged by known techniques.

During the drying stage, the batch of powders 4 is sufficiently heated to cause the solvent to pass from the liquid state to the gaseous state. The vapours created inside the process container 2 are then pumped out of the process container 2 by a system of pumps (not illustrated) which maintain a vacuum in the container 2.

In order to increase the efficiency of the drying process, a quantity of dry gas (which, as described below, in the case of the present invention is preferably nitrogen) is blown through an inlet 10 (only sketched in figure 1) and through the batch of powders 4, so as to add to the thermal batch heating action a mechanical action in which the solvent vapours are provided with a carrier in order to leave the container. This is the "stripping" operation referred to above.

The heat exchanger 13, in which condensation occurs at a sufficiently low temperature, is envisaged to recover the solvent vapours extracted from the batch of powders.

The vacuum line on a pelletizer-drier, labelled 9, 11 in the figure, starts at the filters 9 located above the process container 2, and passes first through the heat exchanger 13, then through a system of vacuum pumps (the system of pumps is not described, since it is not part of the present invention).

In order to cause a significant amount of the solvent vapours to condense, the condenser 13 is connected to a supply line 14 for a coolant (preferably liquid nitrogen) which, in the example illustrated, is contained in a tank 15.

When the heat exchange has taken place, the mixture consisting of the gaseous fluid and solvent is separated. The solvent recovered is fed along the line 18 and into a collection tank 19, and the purified gaseous fluid is directed towards the tube 17. By using nitrogen or another inert gas as the gaseous fluid, once it has been purified of the solvent after the heat exchange in the condenser 13, it is sent to the main inert gas distribution line 16 for the appropriate use, shown as the block in figure 1.

Again with reference to the embodiment illustrated, during system operation the present invention envisages the use of a liquid nitrogen heat exchanger 13. The nitrogen is taken from the tank 15 (which may be the centralized liquid nitrogen tank commonly used in many factories) and sent to the heat exchanger 13 through the tube 14. When it has been used for the heat exchange, the nitrogen is fed through the tube 12 and inlet 10, into the container 2, so as to carry out the stripping of the batch of powders 4.

The mixture consisting of the nitrogen and solvent is extracted from the container 2 through the tube 11, which may be fitted with filters 9, and sent to the heat exchanger 13 for recovery of the solvent, as described above.

The advantages of the present invention, therefore, include the possibility of a triple use of the nitrogen: as a coolant in the heat exchanger, a gaseous fluid for stripping and an inert fluid in other activities in the facility.

The invention described can be subject to modifications and variations without thereby departing from the scope of the inventive concept. Moreover, all the details of the invention may be substituted by technically equivalent elements.

## Claims

1. A system for pelletizing products, of the type which includes at least a pelletizer (1) and heat exchanger (13); said pelletizer (1) including: a process container (2), this being designed to contain a batch of powders to be pelletized, spraying means (8), being designed to make the said batch of powders humid with a pelletizing solution and solvent, means (10) for the infeed of a gaseous fluid, said fluid designed to carry the solvent when it is the gaseous state, extractor means (9, 11), being designed to extract from the container (2) the mixture consisting of the gaseous fluid and solvent in the gaseous state, carrying them to the heat exchanger (13), where the solvent is at least partially recovered by means of heat exchange with a coolant flowing through an inlet and outlet on the heat exchanger (13), the system being characterised in that it includes, at the infeed of the heat exchanger (13), first supply means (14) for a fluid in the liquid state, being designed to constitute the coolant, and second supply means (12) in the process container (2), these being for the coolant which acts between the heat exchanger (13) and inlet (10), allowing the coolant which leaves the heat exchanger (13) to be used as a gaseous fluid for carrying the solvent.

2. The system for pelletizing products as described in claim 1, characterised in that the coolant is nitrogen.

3. The system for pelletizing products as described in claim 2, where the system is included in or connected to an industrial complex including an inert fluid circuit, characterised in that third supply means (17) are envisaged at the outfeed of the heat exchanger (13), said means being designed to transfer the gaseous fluid used to carry the solvent, purified of the latter by the heat exchanger (13), to the inert circuit (16, 20).

4. The system for pelletizing products as described in claim 2, where the system is included in an industrial complex envisaging at least one liquid nitrogen tank, characterised in that the first supply means (14) are positioned and operate between at least one nitrogen tank (15) and the heat exchanger (13).

5. A process for pelletizing products, of the type including at least the following operating stages: positioning of a batch of products in a process container, spraying of the batch with a pelletizing solution and solvent, stripping of the batch of products thus treated by means of a gaseous fluid fed into the container, and recovery of the solvent from the mixture consisting of the solvent and the gaseous fluid by means of heat exchange, in a heat exchanger, between the said mixture and a coolant, the process being characterised in that the coolant is used for the said stripping, the coolant leaving the heat exchanger (13) being fed into the container (2), thus constituting the gaseous fluid.

6. The process as described in claim 5, characterised in that liquid nitrogen is used as the coolant.

7. The process as described in claim 6, where the process is carried out by a system which is included in or connected to an industrial complex including an inert fluid circuit, characterised in that, having been purified of the solvent by the heat exchanger (13), the gaseous fluid used to carry the solvent is fed to the inert circuit (16, 20).

8. The process as described in claim 5, where the process is carried out by a system which is included in or connected to an industrial complex including at least one liquid nitrogen tank, characterised in that the nitrogen contained in the said tank (15) is used as the coolant.
